# EUROPEAN PATENT APPLICATION

(11) **EP 4 119 604 A1**
(43) Date of publication of application: **18.01.2023**
(21) Application number: 21768162.6
(22) Date of filing: 17.02.2021
(51) Int. Cl.: C08J 7/04, B32B 27/20, B32B 27/30, B65D 65/40, C09K 3/18

(54) **LIQUID-REPELLANT STRUCTURE, PRODUCTION METHOD FOR LIQUID-REPELLANT STRUCTURE, COATING LIQUID FOR LIQUID-REPELLANT LAYER FORMATION, AND PACKAGING MATERIAL**

(30) Priority: 12.03.2020 JP 2020042791
(71) Applicant: TOPPAN INC., Tokyo 110-0016 (JP)
(72) Inventor: KATO Ryoji, Tokyo 110-0016 (JP); KINOSHITA Kosuke, Tokyo 110-0016 (JP); OGIHARA Yu, Tokyo 110-0016 (JP)
(74) Representative: TBK
(86) International application number: PCT/JP2021/005911
(87) International publication number: WO 2021/182044

(57) **Abstract**

A liquid repellent structure including: a surface to which liquid repellency is to be imparted; and a liquid repellent layer formed on the surface, wherein the liquid repellent layer contains a binder resin containing a fluorine-containing resin, and a filler dispersed in the binder resin, the filler contains a first filler having a BET specific surface area M of 100 m²/g to 400 m²/g, and a ratio M/F of the BET specific surface area M of the first filler to a mass F (mass%) of the fluorine-containing resin relative to a total mass of the liquid repellent layer is 1.5 to 4.0.

## Description

### [Technical Field]

The present disclosure relates to liquid repellent structures, methods for producing liquid repellent structures, liquid repellent layer-forming coating liquids, and packaging materials.

### [Background Art]

Various modes are known for structures having water repellency. For example, PTL 1 discloses a single-layer water-repellent heat seal film containing a thermoplastic resin and hydrophobic particles.

### [Citation List]

### [Patent Literature]

PTL 1: JP 2017-155183 A

### [Summary of the Invention]

### [Technical Problem]

In the invention disclosed in PTL 1, water repellency is evaluated based on the contact angle with water droplets or the like. However, in the invention disclosed in this document, it is unclear whether the liquid repellency to water can be maintained for a long period of time.

The present disclosure has an object to provide a liquid repellent structure having liquid repellency to water for a long period of time. Another object of the present disclosure is to provide a method for producing the liquid repellent structure, a liquid repellent layer-forming coating liquid, and a packaging material having the liquid repellent structure on a side that comes into contact with substances.

### [Solution to Problem]

The liquid repellent structure according to the present disclosure is a liquid repellent structure including a surface to which liquid repellency is to be imparted (hereinafter, sometimes referred to as a "treatment surface"), and a liquid repellent layer formed on the surface, wherein the liquid repellent layer contains a binder resin containing a fluorine-containing resin and a filler dispersed in the binder resin. In the liquid repellent layer, the filler contains a first filler having a BET specific surface area M of 100 m²/g to 400 m²/g, and a ratio M/F of the BET specific surface area M of the first filler to a mass F (mass%) of the fluorine-containing resin relative to a total mass of the liquid repellent layer is 1.5 to 4.0.

The liquid repellent layer in the liquid repellent structure has excellent liquid repellency to water and oil, and can maintain liquid repellency especially to water for a long period of time. The present inventors consider the reason why the above effect is obtained to be as follows. That is, in order to exhibit liquid repellency to a liquid having a high surface tension, such as water, it is necessary to firmly form micro-asperities by the first filler. The shape and strength of the micro-asperities are determined by the ratio (M/F) of the BET specific surface area of the first filler to the mass of the fluorine-containing resin. If M/F is within the above range, firm and micro-asperities can be efficiently formed, leading to excellent liquid repellency and maintaining the liquid repellency for a long period of time.

In the above liquid repellent structure, the first filler may have a structure in which a plurality of primary particles are connected in a bead-like manner. The bead-like structure of the bead-like filler, which has a three-dimensional structure, is likely to impart flexibility to the liquid repellent layer, and can maintain the liquid repellency for a longer period of time.

In the above liquid repellent structure, the fluorine-containing resin may contain a fluorine-acrylic copolymer. Due to the fluorine-acrylic copolymer being contained, the liquid repellency can be maintained for a longer period of time.

In the above liquid repellent structure, the filler may contain a scale-like filler. Due to the scale-like filler being contained in the liquid repellent layer, the liquid repellent layer can efficiently form asperities on the surface and easily maintain liquid repellency to water for a long period of time.

The above liquid repellent structure may further include a primer layer interposed between the surface and the liquid repellent layer, wherein the primer layer may contain a binder resin and a third filler having an average primary particle size of 5 µm to 60 µm. Accordingly, rough asperities can be formed on the liquid repellent structure. Since the rough asperities facilitate point contact between the liquid repellent layer and the contents, deterioration of the liquid repellency can be further suppressed.

The above liquid repellent structure may have a surface roughness Sa of 1.5 µm to 15.0 µm so that the effect of holding the contents by point contact can be easily achieved.

The present disclosure provides a packaging material including the above liquid repellent structure on a side that comes into contact with substances. As described above, the liquid repellent layer in the liquid repellent structure has excellent liquid repellency to water for a long period of time. Therefore, the packaging material can be applied to substances containing water.

The present disclosure provides a method for producing a liquid repellent structure. The above liquid repellent structure is produced through following steps of forming a liquid repellent layer. That is, the method for producing the liquid repellent structure includes the steps of: preparing a coating liquid containing a binder resin containing a fluorine-containing resin, and a filler; forming a coating film of the coating liquid on a surface to which liquid repellency is to be imparted; and forming a liquid repellent layer by drying and curing the coating film. In the coating liquid used in the above production method, the filler contains a first filler having a BET specific surface area M of 100 m²/g to 400 m²/g, and a ratio M/F of the BET specific surface area M of the first filler to a mass F (mass%) of the fluorine-containing resin relative to a total mass of a solid content contained in the coating liquid is 1.5 to 4.0. According to the above method, the liquid repellent structure of the present disclosure having the above effects can be produced.

The present disclosure provides a liquid repellent layer-forming coating liquid used in the method for producing the liquid repellent structure. That is, the liquid repellent layer-forming coating liquid is a coating liquid that contains a binder resin containing a fluorine-containing resin, and a filler, the filler containing a first filler having a BET specific surface area M of 100 m²/g to 400 m²/g, and a ratio M/F of the BET specific surface area M of the first filler to a mass F (mass%) of the fluorine-containing resin relative to a total mass of a solid content contained in the coating liquid is 1.5 to 4.0. By using the above coating liquid, the liquid repellent structure of the present disclosure having the above effects can be produced.

### [Advantageous Effects of the Invention]

According to the present disclosure, a liquid repellent structure having liquid repellency to water for a long period of time is provided. Furthermore, according to the present disclosure, there are provided a method for producing the liquid repellent structure, a liquid repellent layer-forming coating liquid, and a packaging material having the liquid repellent structure on a side that comes into contact with substances.

### [Brief Description of the Drawings]

Fig. 1 is a schematic cross-sectional view illustrating an embodiment of a liquid repellent structure according to the present disclosure.
Fig. 2 is a schematic cross-sectional view illustrating another embodiment of a liquid repellent structure according to the present disclosure.
Fig. 3 is a schematic cross-sectional view illustrating still another embodiment of a liquid repellent structure according to the present disclosure.

### [Description of the Embodiments]

With reference to the accompanying drawings, some embodiments of the present disclosure will be described in detail below. In the following description, the same elements or elements having the same functions will be denoted by the same reference numerals, and redundant description will be omitted.

### <Liquid Repellent Structure>

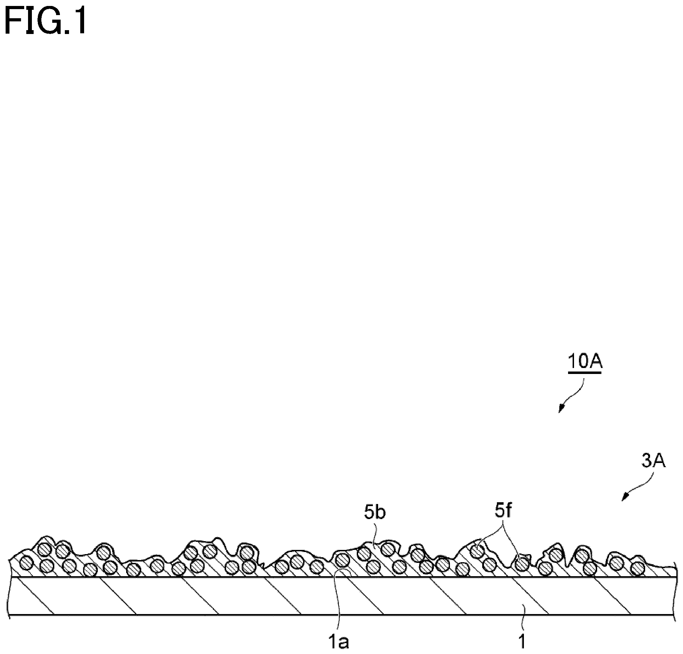

Fig. 1 is a schematic cross-sectional view illustrating an embodiment of a liquid repellent structure according to the present disclosure. As shown in Fig. 1, a liquid repellent structure 10A includes a substrate 1 having a treatment surface 1a (surface to which liquid repellency is to be imparted), and a liquid repellent layer 3A formed on the treatment surface 1a.

### (Substrate)

The substrate 1 is not particularly limited as long as it has a surface to which liquid repellency is to be imparted and serves as a support. For example, the substrate 1 may be a film-like substrate (thickness: about 10 µm to 200 µm) or a plate-like substrate (thickness: about 1 mm to 10 mm). Examples of the film-like substrate include paper, resin films, metal foil, and the like. By forming a liquid repellent layer 3 on the inner surface, as the treatment surface 1a, of a packaging material film made of such materials, a packaging bag to which the contents are less likely to adhere can be obtained. Examples of the plate-like substrate include paper, resin, metal, glass, and the like. By forming a liquid repellent layer 3 on the inner surface, as the treatment surface 1a, of a container made of such materials, a container to which the contents are less likely to adhere can be obtained.

Examples of the paper include high-quality paper, special high-quality paper, coated paper, art paper, cast-coated paper, imitation paper, kraft paper, and the like. Examples of the resin include polyolefins, acid-modified polyolefins, polyesters (e.g., polyethylene terephthalate (PET)), polyethylenes (PE), polypropylenes (PP), polyamides (PA), polyvinyl chlorides (PVC), cellulose acetates, cellophane resins, and the like. Examples of the metal include aluminum, nickel, and the like.

When the substrate 1 is a film, the substrate 1 is preferably thermally fusible with the liquid repellent layer 3. Further, when a primer layer is interposed between the substrate 1 and the liquid repellent layer 3 as will be described later, the substrate 1 is preferably thermally fusible with the primer layer. The melting point of the substrate 1 is preferably 170°C or lower. Thus, when a packaging bag is formed using heat sealing, adhesion between the substrate 1 and the liquid repellent layer 3 becomes stronger, so that the heat sealing properties are further improved. From such a viewpoint, the melting point of the substrate 1 is more preferably 150°C or lower. The melting point of the substrate 1 can be measured by differential scanning calorimetry.

### (Liquid Repellent Layer)

The liquid repellent layer 3A is a layer having liquid repellency, and contains a first filler 5f and a binder resin 5b. The liquid repellent layer 3A is formed to partially or entirely cover the surface of the substrate 1. Liquid repellency is a concept including both water repellency and oil repellency, and specifically refers to properties of repelling liquid, semi-solid, or gel-like aqueous or oily materials. Examples of the aqueous or oily materials include foods, such as water, oil (salad oil or the like), yogurt, curry, dairy cream, jelly, pudding, syrup, porridge and soup; detergents, such as hand soap, body soap, shampoo and hair conditioner; cosmetics, such as hand creams and milky lotions; pharmaceuticals; and chemicals. In the liquid repellent structure 10, the liquid repellent layer 3A forms the innermost layer or the outermost layer that is in direct contact with these materials. The liquid repellent layer according to the present embodiment can maintain liquid repellency (liquid repellent durability) especially to water, among the above materials, for a long period of time.

As shown in Fig. 1, the liquid repellent layer 3A contains the first filler 5f. The first filler 5f may have, for example, a spherical shape, and an average primary particle size thereof is preferably 3 nm to 1,000 nm, more preferably 5 nm to 100 nm, and still more preferably 5 nm to 20 nm. When the first filler 5f has the average primary particle size of 3 nm or more, micro-asperities are likely to be easily formed without the first filler being buried in the fluorine-containing resin, and when the first filler 5f has the average primary particle size of 1,000 nm or less, micro-asperities tend to be easily formed by the fluorine-containing resin and the first filler. The average primary particle size of the first filler refers to the average of the values obtained by measuring the major axis and minor axis of each of 10 particles of the first filler in an SEM or TEM field of view and dividing the sum of each of them by 2.

Examples of the material constituting the first filler 5f include silica, titanium oxide, aluminum oxide, mica, talc, calcium carbonate, barium sulfate, zinc oxide, smectite, zeolite and acrylic resin, or the like.

The first filler 5f may be a bead-like filler having a structure in which a plurality of primary particles are connected in a bead-like manner. The bead-like structure of the bead-like filler may include, in addition to the structure in which spherical particles are connected in a bead-like manner, a branched structure in which spherical particles are connected in a chain form. The bead-like structure, which has a three-dimensional structure, is likely to impart flexibility to the liquid repellent layer. Due to the bead-like filler being used, the liquid repellent layer is likely to maintain liquid repellency not only to water but also to liquid materials containing water for a long period of time. The bead-like filler can also be referred to as a pearl necklace type filler.

The bead-like filler preferably has an average particle size (average secondary particle size) of 50 nm to 1,000 nm, more preferably 100 nm to 400 nm, and still more preferably 100 nm to 200 nm. When the bead-like filler has the average particle size of 50 nm or more, the bead-like filler is likely to easily impart its flexibility to the liquid repellent layer. When the bead-like filler has the average particle size of 1,000 nm or less, the bead-like filler is likely to easily form micro-asperities. The average particle size of the bead-like filler refers to the average of the values obtained by measuring the major axis and minor axis of each of 10 particles of the bead-like filler in a TEM field of view and dividing the sum of each of them by 2.

The first filler 5f has a BET specific surface area M of 100 m²/g to 400 m²/g. When the BET specific surface area M is 100 m²/g or more, micro-asperities sufficient to obtain liquid repellency can be formed, and when the BET specific surface area M is 400 m²/g or less, micro-asperities can be formed without the first filler being buried in the fluorine-containing resin. From this perspective, the BET specific surface area M of the first filler 5f is preferably 130 m²/g to 300 m²/g, and more preferably 200 m²/g to 300 m²/g. The BET specific surface area of the filler is measured by the BET method.

The content of the first filler 5f in the liquid repellent layer 3A may be, for example, 20 mass% to 80 mass% relative to the total mass of the liquid repellent layer, preferably 30 mass% to 75 mass%, and more preferably 30 mass% to 50 mass%. When the content of the first filler 5f is within the above range, it is possible to easily prevent the first filler 5f from detaching, and to form sufficient asperities on the liquid repellent layer 3A. Accordingly, excellent liquid repellency due to the first filler 5f can be easily achieved.

As the first filler 5f, commercially available products can be used. Examples of the commercially available products of silica filler include AEROSIL (AEROSIL 130, 200, 300, 380, and the like) manufactured by Nippon Aerosil Co., Ltd., REOLOSIL (QS-10, 20 and 40) manufactured by Tokuyama Corporation, Spherical-Silica Fine Particles QSG manufactured by Shin-Etsu Chemical Co., Ltd., and SNOWTEX series (SNOWTEX ST-30, and the like) manufactured by Nissan Chemical Corporation. Examples of the commercially available products of aluminum oxide filler include AEROXIDE Alu manufactured by Evonik Degussa. Further, examples of the commercially available products of the bead-like filler include the HDK series (HDK V15, N20, T30, T40, and the like) manufactured by Wacker Asahikasei Silicone Co., Ltd., and SNOWTEX series (SNOWTEX PS-S-PO, and the like) manufactured by Nissan Chemical Corporation.

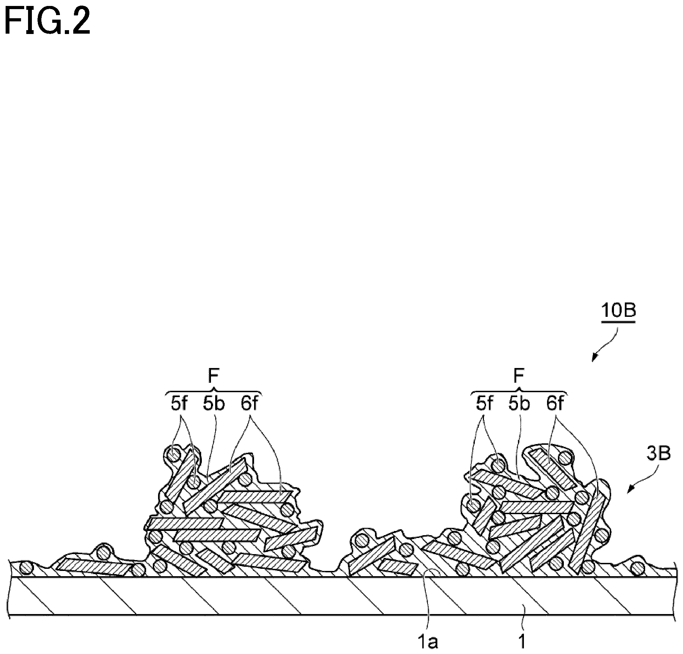

Fig. 2 is a schematic cross-sectional view illustrating another embodiment of a liquid repellent structure according to the present disclosure. As shown in Fig. 2, a liquid repellent structure 10B includes a substrate 1 having a treatment surface 1a and a liquid repellent layer 3B formed on the treatment surface 1a. As shown in Fig. 2, the liquid repellent layer 3B may further contain a second filler 6f in addition to the first filler 5f and the binder resin 5b. The second filler 6f has a scale-like (flake-like) shape, and can be referred to as a scale-like (flake-like) filler. When the filler contains the second filler 6f, the liquid repellent layer 3B may contain an aggregate F of the first filler 5f and the second filler 6f. The first filler 5f, the second filler 6f and the aggregate F form asperities on a surface of the liquid repellent layer 3B. The aggregate F is composed of the first filler 5f, the second filler 6f and the binder resin 5b covering these fillers. The liquid repellent layer 3B having the above configuration can further efficiently form asperities on the surface and easily maintain liquid repellency to water (water repellency) for a long period of time. Further, the liquid repellent layer 3B can easily maintain liquid repellency not only to water but also to liquid materials containing water for a long period of time. The liquid repellent layer 3B can easily maintain liquid repellency to substances containing alcohol in addition to water, such as a lotion, over a longer period of time.

The second filler 6f can be present in the form of primary particles, secondary aggregates or tertiary aggregates thereof. The secondary aggregates are formed of a plurality of overlapped primary particles of the second filler 6f in a parallel orientation. The tertiary aggregates of the second filler 6f are formed by crystal growth in each direction due to the irregular stacking of the primary particles and the secondary aggregates.

The second filler 6f preferably has an average particle size of 0.1 µm to 6 µm, and more preferably 0.1 µm to 4 µm or 4 µm to 6 µm. When the average particle size of the second filler 6f is 0.1 µm or more, an aggregate F is easily formed, and when the average particle size of the second filler 6f is 6 µm or less, liquid repellency derived from the complex and fine shape of the second filler 6f is sufficiently exhibited. The average particle size of the second filler refers to the average of the values obtained by measuring the major axis and minor axis of each of 10 particles of the second filler in an SEM field of view and dividing the sum of each of them by 2.

Examples of the material constituting the second filler 6f include silica, mica, aluminum oxide, talc, titanium oxide, calcium carbonate, barium sulfate, zinc oxide, smectite, zeolite, and the like. Examples of commercially available products of scale-like silica include SUNLOVELY manufactured by AGC Si-Tech Co., Ltd. Examples of commercially available products of scale-like mica include Repco Mica manufactured by Repco Inc. Examples of commercially available products of scale-like aluminum oxide include Cerasur manufactured by Kawai Lime Industry Co., Ltd. Further, the second filler 6f may not be necessarily subjected to hydrophobic treatment or liquid repellency treatment.

The content of the second filler 6f in the liquid repellent layer 3B may be, for example, 5 parts by mass to 100 parts by mass, preferably 5 parts by mass to 75 parts by mass, and more preferably 5 parts by mass to 50 parts by mass, relative to 100 parts by mass of the first filler 5f. When the content of the second filler 6f is within the above range, it is possible to more sufficiently prevent the formation of excessively large aggregates due to excessive stacking (aggregation) of the primary particles of the second filler 6f, and excellent liquid repellency due to the first filler 5f and the second filler 6f can be easily obtained.

A plurality of aggregates F may be separate from each other in the liquid repellent layer 3B. That is, the plurality of aggregates F may be arranged in islands. Alternatively, a large number of aggregates F may be continuously formed to form a porous layer composed of the aggregates F in the liquid repellent layer 3B. In addition, the aggregates F have a complex shape derived from the complex and fine shape of the second filler 6f. That is, the aggregates F have a pleated surface and voids formed by the pleats because a plurality of primary particles (e.g., particles having an average primary particle size of 0.1 µm to 6 µm) of the second filler 6f are aggregated in random arrangement. According to the study by the present inventors, when the size ((major axis + minor axis)/2) of a single aggregate F is 4 µm or more, the aggregates F greatly contribute to improving the liquid repellency of the liquid repellent layer.

The binder resin 5b contains at least a fluorine-containing resin. The binder resin 5b may further contain one or both of a thermoplastic resin and a crosslinking agent. When the binder resin 5b contains a crosslinking agent, the binder resin 5b in the liquid repellent layer 3 may have a crosslinked structure in which the fluorine-containing resin and the thermoplastic resin are crosslinked through a crosslinking agent.

The fluorine-containing resin is not particularly limited, and a resin having a perfluoroalkyl, perfluoroalkenyl or perfluoropolyether structure or the like can be used as appropriate. The fluorine-containing resin preferably contains a fluorine-acrylic copolymer from the viewpoint of further improving the liquid repellency of the liquid repellent layer 3. The fluorine-acrylic copolymer is a copolymer composed of a fluorine-containing monomer and an acrylic monomer. The fluorine-acrylic copolymer may be a block copolymer or a random copolymer. The use of the fluorine-acrylic copolymer makes it possible to improve the weather resistance, water resistance, chemical resistance, and film-forming properties of the liquid repellent layer 3.

The fluorine content of the fluorine-containing resin may be, for example, 30 mass% to 60 mass%, and preferably 40 mass% to 50 mass%. The fluorine content refers to the ratio of the mass of fluorine atoms to the total mass of the atoms constituting the fluorine-containing resin.

Commercially available fluorine-based coating agents can be used as the fluorine-containing resin. Examples of the commercially available fluorine-based coating agents include AsahiGuard manufactured by AGC Inc., SFcoat manufactured by AGC Seimi Chemical Co., Ltd., Ftergent manufactured by Neos Co., Ltd., Fluorolink manufactured by Solvay, Unidyne manufactured by Daikin Industries Ltd., the H-3539 series manufactured by DKS Co. Ltd., and Modiper F series manufactured by NOF Corporation.

Due to the fluorine-containing resin being used, it is possible to improve liquid repellency not only to water but also to oil or liquid materials containing oil, or highly viscous liquid materials containing surfactants and the like (e.g., milky lotion, hand soap, body soap, shampoo and hair conditioner). From this perspective, the fluorine-containing resin may not necessarily contain structural units derived from pyrrolidone or derivatives thereof (pyrrolidones). Examples of the pyrrolidones include N-vinyl-2-pyrrolidone, N-vinyl-3-methyl-2-pyrrolidone, N-vinyl-5-methyl-2-pyrrolidone, and N-vinyl-3,3-dimethyl-2-pyrrolidone. Examples of fluorine-containing resins that do not contain structural units derived from pyrrolidones include AsahiGuard AG-E060, AGE070, AG-E082 and AG-E090 manufactured by AGC Inc., and Unidyne TG-8111 manufactured by Daikin Industries, Ltd.

The thermoplastic resin is not particularly limited, and examples thereof include low density polyethylenes, medium density polyethylenes, high density polyethylenes, ethylene-a olefin copolymers, homo, block or random polypropylenes, propylene-a olefin copolymers, ethylene-vinyl acetate copolymers, and the like. For example, ethylene-a olefin copolymers may be a block copolymers or random copolymers of propylene and α olefins. Examples of the α-olefin components include ethylene, 1-butene, 1-pentene, 1-hexene, 1-heptene, 1-octene, 4-methyl-1-pentene, and the like.

The melting point of the thermoplastic resin may be, for example, 50°C to 135°C. When the melting point is 135°C or lower, the fluorine-containing resin can easily bleed out on the surface of the liquid repellent layer. Due to the fluorine-containing resin bleeding out on the surface, the surface free energy can be lowered, whereby the surface of the liquid repellent layer can exhibit excellent liquid repellency. Bleed-out of the fluorine-containing resin can be promoted by drying at a high temperature. However, if the melting point of the thermoplastic resin is too high, a corresponding high temperature is required, which may cause damage such as deformation of the substrate 1. On the other hand, when the melting point is 50°C or higher, a certain degree of crystallinity is secured, and thus occurrence of blocking due to softening is prevented. From such a viewpoint, the melting point of the thermoplastic resin is more preferably 60°C to 120°C.

The thermoplastic resin may be a modified polyolefin modified with a predetermined acid. The modified polyolefin may be obtained by, for example, graft-modifying a polyolefin with an unsaturated carboxylic acid derivative component derived from an unsaturated carboxylic acid, an unsaturated carboxylic acid anhydride or an unsaturated carboxylic acid ester. Further, a modified polyolefin such as hydroxyl group-modified polyolefin or acrylic-modified polyolefin can be used as the polyolefin. Examples of the modified polyolefin resin include Auroren manufactured by Nippon Paper Industries Co., Ltd., Zaikthene manufactured by Sumitomo Seika Chemicals Co., Ltd., Unistole manufactured by Mitsui Chemicals, Inc., Arrowbase manufactured by Unitika Ltd., and the like.

The above modified polyolefins are preferred from the viewpoint of easily reacting with a crosslinking agent to form a crosslinked structure since they have a functional group introduced therein. Examples of the functional group include a carboxyl group, a hydroxyl group, a (meth)acryloyl group, an amino group, and the like. By using the modified polyolefin having such a functional group together with a crosslinking agent described later, a crosslinked structure composed of a thermoplastic resin, a fluorine-containing resin and the crosslinking agent can be formed in the liquid repellent layer 3 to impart more excellent durability to the liquid repellent layer 3.

The crosslinking agent preferably has a functional group that reacts with a fluorine-containing resin. Examples of the crosslinking agent include crosslinking agents having a functional group such as an aziridine group, an isocyanate group, a carbodiimide group or an amino group. Examples of commercially available crosslinking agents include Chemitite manufactured by Nippon Shokubai Co., Ltd., Takenate manufactured by Mitsui Chemicals, Inc., Carbodilite manufactured by Nisshinbo Chemical Inc., Meikanate manufactured by Meisei Chemical Works, Ltd., and Cymel manufactured by Cytec Industries Japan LLC.

The fluorine-containing resin is generally used as an aqueous dispersion dispersed in water. Therefore, many fluorine-containing resins have hydrophilic groups, such as hydroxyl groups and amino groups, in order to enhance the affinity with water. Due to the use of a crosslinking agent having functional groups that react with the fluorine-containing resin, these functional groups of the fluorine-containing resin react with the functional groups of the crosslinking agent to form a crosslinked structure in the liquid repellent layer. Further, these functional groups of the fluorine-containing resin decrease by reaction with the crosslinking agent, and thus the functional groups remaining in the liquid repellent layer decrease. Accordingly, even when the liquid repellent layer is in contact with a liquid material for a long period of time, it is possible to prevent deterioration of the liquid repellency and maintain excellent liquid repellency for a long period of time. When the fluorine-containing resin is used as a dispersion dispersed in a solvent other than water, the fluorine-containing resin may have a structure (for example, a hydrocarbon chain) for enhancing the affinity with the solvent used.

As described above, when the BET specific surface area M of the first filler 5f is 100 m²/g to 400 m²/g, a ratio M/F of the BET specific surface area M of the first filler 5f to the mass F (mass%) of the fluorine-containing resin in the liquid repellent layer relative to the total mass of the liquid repellent layer is 1.5 to 4.0. The inventors have found that it is not sufficient to focus only on the mass of the first filler and the mass of the fluorine-containing resin in order to form a liquid repellent layer that maintains liquid repellency to water for a long period of time, and that it is important to adjust the mass of the fluorine-containing resin according to the BET specific surface area of the first filler. When the M/F value is within the above range, liquid repellency to water (water repellency) can be maintained for a long period of time. From this perspective, M/F is preferably 2.0 to 4.0, and more preferably 3.0 to 4.0.

The content of the fluorine-containing resin in the binder resin 5b (relative to the mass of the binder resin 5b) may be, for example, 5 mass% or more, preferably 15 mass% or more, and more preferably 50 mass% or more. Although the content of the fluorine-containing resin in the binder resin 5b may be 100 mass%, the content of the fluorine-containing resin when the binder resin 5b contains a thermoplastic resin or a crosslinking agent may be 99 mass% or less, and preferably 75 mass% or less. When the content of the fluorine-containing resin in the binder resin 5b is 5 mass% or more, the liquid repellent layer can easily exhibit excellent liquid repellency, and when the content of the fluorine-containing resin is 99 mass% or less, it is possible to ensure a sufficient content of the thermoplastic resin and the crosslinking agent, thereby preventing the filler from detaching from the liquid repellent layer and enhancing durability of the liquid repellent layer.

The content of the thermoplastic resin in the binder resin 5b (relative to the mass of the binder resin 5b) may be, for example, 5 mass% to 90 mass%, preferably 10 mass% to 50 mass%, and more preferably 20 mass% to 30 mass%. When the content of the thermoplastic resin in the binder resin 5b is 5 mass% or more, it is possible to sufficiently prevent detachment of the filler from the liquid repellent layer, and when the content of the thermoplastic resin is 90 mass% or less, it is possible to ensure a sufficient content of the fluorine-containing resin and the crosslinking agent, thereby causing the liquid repellent layer to easily exhibit excellent liquid repellency and durability.

A ratio W_{C}/W_{J} of a mass Wc of the crosslinking agent contained in the binder resin 5b to a mass W_{J} of the fluorine-containing resin contained in the binder resin 5b may be, for example, 0.01 to 0.5, preferably 0.05 to 0.3, and more preferably 0.1 to 0.2. When the ratio W_{C}/W_{J} is 0.01 or more, it is possible to sufficiently prevent the filler from detaching from the liquid repellent layer and sufficiently enhance durability of the liquid repellent layer. On the other hand, when the ratio W_{C}/W_{J} is 0.5 or less, it is possible to ensure a sufficient content of the fluorine-containing resin, which can sufficiently bleed out on the surface of the liquid repellent layer, thereby exhibiting excellent liquid repellency.

A ratio W_{B}/W_{S} of a mass W_{B} of the binder resin 5b to a mass Ws of the filler contained in the liquid repellent layer may be 0.1 to 5, preferably 0.2 to 2, and more preferably 0.3 to 1. The mass W_{B} of the binder resin 5b corresponds to the total mass of the mass W_{J} of the fluorine-containing resin, the mass W_{P} of the thermoplastic resin contained as necessary, and the mass Wc of the crosslinking agent contained as necessary. When the ratio W_{B}/W_{S} is within the above range, asperities due to the filler are likely to be formed on the surface of the liquid repellent layer while the entire filler is sufficiently covered with the binder resin 5b. As a result, the filler is prevented from detaching from the liquid repellent layer, and both the liquid repellency due to the filler and the liquid repellency due to the fluorine-containing resin contained in the binder resin 5b can be achieved. Further, since the mass Ws of the filler does not substantially change during combustion, the value of the ratio W_{B}/W_{S} can be calculated by measuring changes in the mass of the liquid repellent layer 3 due to combustion.

The mass per unit area of the liquid repellent layer may be, for example, 0.3 g/m² to 10.0 g/m², preferably 1.0 g/m² to 3.0 g/m², and more preferably 1.5 g/m² to 2.5 g/m². When the mass per unit area of the liquid repellent layer is 0.3 g/m² or more, excellent liquid repellency due to the fluorine-containing resin can be achieved. On the other hand, when the mass per unit area of the liquid repellent layer is 10.0 g/m² or less, asperities and the liquid repellent effect due to the fluorine-containing resin can be efficiently obtained.

The liquid repellent layer may contain other additive as needed within a range that does not impair the liquid repellent function. Examples of other additives include flame retardants, slip agents, anti-blocking agents, antioxidants, photostabilizers, tackifiers, and the like.

From the perspective of further improving the liquid repellency to highly viscous liquids containing surfactants or the like, the liquid repellent layer may not necessarily contain structural units derived from pyrrolidones. Specifically, structural units derived from pyrrolidones may need to be contained neither in the fluorine-containing resin nor in other components forming the liquid repellent layer. The presence of structural units derived from pyrrolidones in the liquid repellent layer can be determined by infrared spectroscopy, nuclear magnetic resonance spectroscopy, pyrolysis GC-MS, or the like.

The above embodiments illustrate examples in which the liquid repellent layer is formed directly on the treatment surface 1a of the substrate 1. However, it is also possible to form the liquid repellent layer on a primer layer formed on the treatment surface 1a of the substrate 1. The primer layer is a layer interposed between the substrate 1 and the liquid repellent layer, and can be formed to partially or entirely cover the surface of the substrate 1 (treatment surface 1a). Due to the primer layer being interposed between the substrate 1 and the liquid repellent layer, adhesion between the substrate 1 and the liquid repellent layer can be enhanced. Further, due to the primer layer being provided, liquid repellency of the liquid repellent structure can be further improved.

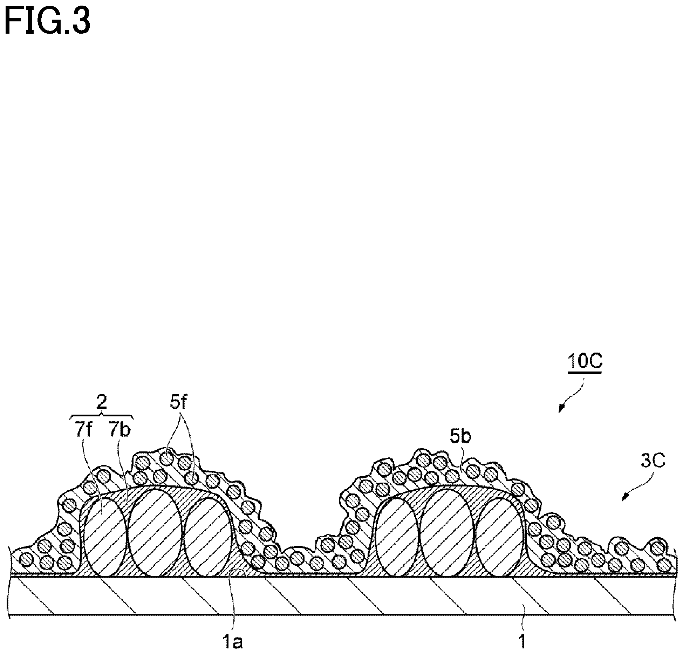

Fig. 3 is a schematic cross-sectional view illustrating still another embodiment of a liquid repellent structure according to the present disclosure. As shown in Fig. 3, a liquid repellent structure 10C includes a substrate 1 having a treatment surface 1a, a primer layer 2 formed on the treatment surface 1a, and a liquid repellent layer 3C formed on the primer layer 2. The primer layer contains a binder resin 7b and a third filler 7f. The liquid repellent layer 3C may contain the first filler 5f and the binder resin 5b as shown in Fig 1, or may further contain the second filler 6f in addition to the first filler 5f and the binder resin 5b as shown in Fig. 2. Fig. 3 illustrates the former configuration as an example. Due to the primer layer 2 being provided under the liquid repellent layer 3C, the liquid repellent layer 3C can efficiently form asperities on the surface and easily maintain liquid repellency for a long period of time. The liquid repellent layer 3C can easily maintain liquid repellency to substances containing alcohol in addition to water, such as lotions, over a longer period of time.

### (Primer Layer)

The primer layer contains a binder resin. The primer layer can be made of the same resin as the thermoplastic resin used for the liquid repellent layer. Specific examples of the thermoplastic resin are as described above. The primer layer may be made of a thermosetting resin. Examples of the thermosetting resin include a urethane resin, an epoxy resin, a phenol resin, and the like. By using a thermosetting resin, further enhanced adhesion between the substrate and the liquid repellent layer can be easily achieved. Examples of the urethane resin include BURNOCK manufactured by DIC Corporation, TAKELAC and TAKENATE manufactured by Mitsui Chemicals, Inc, and the like. Examples of the epoxy resin include EPICLON manufactured by DIC Corporation, and the like.

The primer layer may contain a third filler having an average primary particle size of 5 µm to 60 µm. Examples of the material constituting the third filler include inorganic materials such as silica, talc, mica, titanium oxide, calcium carbonate, barium sulfate, zinc oxide, smectite, zeolite and aluminum oxide; and resin materials such as silicone, acrylic resins, urethane resins and polyolefin resins (polypropylene and polyethylene). Due to the third filler being contained in the primer layer, rough asperities can be formed on the surface of the primer layer. Accordingly, since the liquid repellent layer is formed on the primer layer, the liquid repellent structure can have rough and complex asperities. As a result, the liquid repellency can be further improved. From this perspective, an average primary particle size of the third filler may be 10 µm to 50 µm, and preferably 20 µm to 50 µm. The primary particle size of the third filler may be 5 µm to 30 µm.

Examples of the third filler include SUNSPHERE (silica) (manufactured by AGC Si-Tech Co., Ltd.), Silicone Powder KMP series (silicone) manufactured by Shin-Etsu Chemical Co., Ltd., GANZPEARL (acrylic resin) manufactured by Aica Kogyo Company, Limited., ART PEARL (acrylic resin) manufactured by Negami Chemical Industrial Co., Ltd., ART PEARL (urethane resin) manufactured by Negami Chemical Industrial Co., Ltd., FLO-BEADS (polyethylene resin) manufactured by Sumitomo Seika Chemicals Co., Ltd., FLO-BEADS (polypropylene resin) manufactured by Sumitomo Seika Chemicals Co., Ltd., MIPELON (ultra-high molecular weight polyethylene) manufactured by Mitsui Chemicals, Inc, and the like.

The primer layer can increase the roughness of the asperities of the liquid repellent structure. Since the rough asperities facilitate point contact between the liquid repellent layer and the contents, deterioration of the liquid repellency can be further suppressed. The liquid repellent structure may have a surface roughness Sa of 1.5 µm to 15.0 µm, preferably 2.0 µm to 14.0 µm, and more preferably 5.0 µm to 14.0 µm, from the viewpoint of sufficiently achieving the effect of point contact and preventing the contents from being easily captured in the recess.

A ratio W_{BU}/W_{SU} of a mass W_{BU} of the binder resin to a mass Wsu of the third filler contained in the primer layer may be 0.1 to 1, and preferably 0.2 to 0.5. When the ratio W_{BU}/W_{SU} is within the above range, rough asperities due to the third filler are likely to be formed while preventing detachment of the third filler. The value of the ratio W_{BU}/W_{SU} can be easily adjusted by the added amount of the coating agent. The value of the ratio W_{BU}/W_{SU} can be calculated by measuring changes in the mass of the primer layer due to combustion.

The mass per unit area of the primer layer may be, for example, 1.0 g/m² to 20.0 g/m², and preferably 3.0 g/m² to 10.0 g/m². When the mass per unit area of the primer layer is 1.0 g/m² or more, excellent liquid repellency can be easily achieved. On the other hand, when the mass per unit area of the primer layer is 20.0 g/m² or less, the effect of point contact can be sufficiently obtained.

### <Method for Producing Liquid Repellent Structure>

A method for producing the liquid repellent structure will be described. The production method according to the present embodiment includes the steps of: preparing a liquid repellent layer-forming coating liquid; forming a coating film of the coating liquid on a treatment surface of a substrate; and forming a liquid repellent layer by drying and curing the coating film. Each step will be described below.

First, a coating liquid containing a filler, a fluorine-containing resin, a solvent, a thermoplastic resin if necessary, and a crosslinking agent if necessary is prepared. The filler contains a first filler having a BET specific surface area M of 100 m²/g to 400 m²/g. Examples of the solvent include water, alcohol, organic solvents, and the like. The content (solid content) of each component in the coating liquid may be appropriately adjusted so that the content of each component in the liquid repellent layer becomes as described above. The coating liquid is adjusted so that the ratio M/F of the BET specific surface area M of the first filler to the mass F (mass%) of the fluorine-containing resin relative to the total mass of the solid content contained in the coating liquid becomes 1.5 to 4.0. The thermoplastic resin may be in the form of an emulsion dispersed in water, alcohol, or the like. Such a polyolefin emulsion may be prepared by a method of emulsifying a polymer manufactured by a polymerization reaction of a corresponding monomer, or may be prepared by emulsion polymerization of a corresponding monomer.

The obtained coating liquid is applied to the substrate. Known coating methods can be used without particular limitation, and examples of the methods include an immersion method (dipping method), and methods using a sprayer, a coater, a printer, a brush, or the like. Examples of the types of coaters and printers used in these methods include a gravure coater, a reverse-roll coater, a micro gravure coater, a chamber doctor coater, an air-knife coater, a dip coater, a bar coater, a comma coater, a die coater, and the like. Examples of the coating techniques used in these methods include direct gravure coating, reverse gravure coating, kiss reverse gravure coating, offset gravure coating, and the like. The coating amount of the coating liquid can be appropriately adjusted so that the above-mentioned mass per unit area of the liquid repellent layer can be achieved.

The coating film formed on the substrate is dried and cured by heating. As a result, a liquid repellent structure including a substrate and a liquid repellent layer provided on the substrate can be obtained. When the coating liquid contains a crosslinking agent, the liquid repellent layer has a crosslinked structure composed of the fluorine-containing resin and an optionally used thermoplastic resin and crosslinking agent. The heating conditions are not limited as long as the solvent can be evaporated and a crosslinking reaction can occur. For example, heating can be carried out at 60°C to 100°C for 0.5 minutes to 5 minutes.

When the liquid repellent structure further includes a primer layer, the production method according to the present embodiment includes the steps of: preparing a primer layer-forming coating liquid and a liquid repellent layer-forming coating liquid; forming a coating film of the primer layer-forming coating liquid on a treatment surface of a substrate; forming a primer layer by drying and curing the coating film; forming a coating film of the liquid repellent layer-forming coating liquid; and forming a liquid repellent layer by drying and curing the coating film. The preparation and application of the primer layer-forming coating liquid and the drying and curing of the coating film can be performed according to the description of the preparation and application of the liquid repellent layer-forming coating liquid and the drying and curing of the coating film.

### <Liquid Repellent Layer-Forming Coating Liquid>

The liquid repellent layer-forming coating liquid is prepared in the step of preparing a liquid repellent layer-forming coating liquid. That is, the liquid repellent layer-forming coating liquid is a coating liquid that contains a binder resin containing a fluorine-containing resin, and a filler, the filler containing a first filler having a BET specific surface area M of 100 m²/g to 400 m²/g, and the ratio M/F of the BET specific surface area M of the first filler to the mass F (mass%) of the fluorine-containing resin relative to the total mass of the solid content contained in the coating liquid is 1.5 to 4.0.

### <Packaging Material>

The packaging material according to the present embodiment has the liquid repellent structure on the side that comes into contact with substances. The packaging material according to the present embodiment can be applied to substances containing water (e.g., water, beverages, yogurt and lotion) and substances containing oil (e.g., salad oil, curry and dairy cream), and can also be applied to substances containing a surfactant, such as one selected from the group consisting of milky lotion, hand soap, body soap, shampoo and hair conditioner. The packaging material according to the present embodiment can maintain liquid repellency especially to water, among the above materials, for a long period of time. Specific examples of the packaging material include retort pouches for curry or pasta sauces, containers and lids for yogurt and pudding, containers or refill pouches for toiletries such as hand soap, shampoo and hair conditioner, and tubes for toothpaste and pharmaceuticals.

### Examples

The present disclosure will be described in more detail with reference to the following experimental examples, but the present disclosure is not limited to these examples.

The following materials were prepared to produce liquid repellent structures according to the experimental examples.

### (Substrate)

### - Polyethylene terephthalate (PET) film

### (Fluorine-Containing Resin)

- AsahiGuard AG-E060 (trade name, manufactured by AGC Inc., a fluorine-acrylic copolymer that does not have structural units derived from pyrrolidones, a cationic water-based material)
- AsahiGuard AG-E070 (trade name, manufactured by AGC Inc., a fluorine-acrylic copolymer that does not have structural units derived from pyrrolidones, a cationic water-based material)
- AsahiGuard AG-E082 (trade name, manufactured by AGC Inc., a fluorine-acrylic copolymer that does not have structural units derived from pyrrolidones, a cationic water-based material)
- AsahiGuard AG-E090 (trade name, manufactured by AGC Inc., a fluorine-acrylic copolymer that does not have structural units derived from pyrrolidones, an anionic water-based material)

### (First Filler)

- AEROSIL 50 (trade name, manufactured by Nippon Aerosil Co., Ltd.)
- AEROSIL 90G (trade name, manufactured by Nippon Aerosil Co., Ltd.)
- AEROSIL 130 (trade name, manufactured by Nippon Aerosil Co., Ltd.)
- AEROSIL 200 (trade name, manufactured by Nippon Aerosil Co., Ltd.)
- AEROSIL 300 (trade name, manufactured by Nippon Aerosil Co., Ltd.)
- AEROSIL 380 (trade name, manufactured by Nippon Aerosil Co., Ltd.)
- SNOWTEX ST-30 (trade name, manufactured by Nissan Chemical Corporation)
- SNOWTEX ST-XS (trade name, manufactured by Nissan Chemical Corporation)
- 530 (trade name, manufactured by Fuji Silysia Chemical Ltd.)
- HDK V15 (trade name, manufactured by Wacker Asahikasei Silicone Co., Ltd., bead-like filler)
- HDK N20 (trade name, manufactured by Wacker Asahikasei Silicone Co., Ltd., bead-like filler)
- HDK T30 (trade name, manufactured by Wacker Asahikasei Silicone Co., Ltd., bead-like filler)
- HDK T40 (trade name, manufactured by Wacker Asahikasei Silicone Co., Ltd., bead-like filler)
- SNOWTEX PS-S-PO (trade name, manufactured by Nissan Chemical Corporation, bead-like filler)

### (Second Filler)

- SUNLOVELY (trade name, manufactured by AGC Si-Tech Co., Ltd., average particle size: 4 µm to 6 µm)

### (Third Filler)

- ART PEARL SE-010T (trade name, manufactured by Negami Chemical Industrial Co., Ltd., crosslinked acrylic resin particles)
- ART PEARL SE-020T (trade name, manufactured by Negami Chemical Industrial Co., Ltd., crosslinked acrylic resin particles)
- ART PEARL SE-030T (trade name, manufactured by Negami Chemical Industrial Co., Ltd., crosslinked acrylic resin particles)
- ART PEARL SE-050T (trade name, manufactured by Negami Chemical Industrial Co., Ltd., crosslinked acrylic resin particles)

### (Binder Resin)

- Arrowbase SB5230N (trade name, manufactured by Unitika Ltd., modified polyolefin resin (thermoplastic resin))
- TAKELAC A525/TAKENATE A52 (trade name, manufactured by Mitsui Chemicals, Inc, urethane resin (thermosetting resin))

### (Solvent)

- Alcoholic solvent (2-propanol)
- Ester solvent (ethyl acetate)

### <Production of Liquid Repellent Structure (without Primer Layer)>

Each component was added to an alcohol solvent so that the composition of the liquid repellent layer became as shown in Tables 1 to 5. The resulting mixture was sufficiently stirred to prepare a liquid repellent layer-forming coating liquid, and the coating liquid was applied with a bar coater to a substrate made of a PET film. Subsequently, the applied coating liquid was dried and cured by heating at 80°C for 1 minute to form a liquid repellent layer on the substrate. The coating amount was adjusted so that the mass per unit area of the liquid repellent layer became 1.8 g/m². The F/Si ratio in the table was a ratio of the mass F (mass%) of the fluorine-containing resin to the mass Si (mass%) of the silica filler relative to the total mass of the liquid repellent layer, and corresponded to the value of the W_{B}/W_{S} described above.

### (Surface Roughness)

An arithmetical mean height of the scale limited surface (Sa) was measured according to the article 4.1.7 of JIS B 0681-2 Geometrical product specifications (GPS) - Surface texture: Areal - Part 2: Terms, definitions and surface texture parameters. When the sample was found to have a gradient, surface correction (gradient correction) was performed and then Sa was measured by three-dimensional measurement. Three arbitrary points of the liquid-repellent structure were measured, and the average value thereof was taken as the surface roughness Sa.
Measurement device: OLS4000 manufactured by Olympus Corporation (laser microscope)
Measurement magnification: x20
Measurement mode: multi-layer

**[Table 1]**

| | 1st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 1 | AEROSIL 130 | 15 nm | 130 | None | AGE070 | 20 | 0.25 | 6.5 | 0.6 |
| 2 | | | 130 | | | 26 | 0.35 | 5.0 | 0.6 |
| 3 | | | 130 | | | 33 | 0.50 | 3.9 | 0.6 |
| 4 | | | 130 | | | 41 | 0.70 | 3.2 | 0.5 |
| 5 | | | 130 | | | 50 | 1.00 | 2.6 | 0.5 |
| 6 | | | 130 | | | 58 | 1.40 | 2.2 | 0.5 |
| 7 | | | 130 | | | 67 | 2.00 | 2.0 | 0.5 |
| 8 | | | 130 | | | 83 | 5.00 | 1.6 | 0.5 |
| 9 | AEROSIL 200 | 12 nm | 200 | None | AGE060 | 20 | 0.25 | 10.0 | 0.6 |
| 10 | | | 200 | | | 26 | 0.35 | 7.7 | 0.6 |
| 11 | | | 200 | | | 33 | 0.50 | 6.0 | 0.5 |
| 12 | | | 200 | | | 41 | 0.70 | 4.9 | 0.5 |
| 13 | | | 200 | | | 50 | 1.00 | 4.0 | 0.5 |
| 14 | | | 200 | | | 58 | 1.40 | 3.4 | 0.5 |
| 15 | | | 200 | | | 67 | 2.00 | 3.0 | 0.4 |
| 16 | AEROSIL 300 | 7 nm | 300 | None | AGE082 | 20 | 0.25 | 15.0 | 0.4 |
| 17 | | | 300 | | | 26 | 0.35 | 11.6 | 0.4 |
| 18 | | | 300 | | | 33 | 0.50 | 9.0 | 0.4 |
| 19 | | | 300 | | | 41 | 0.70 | 7.3 | 0.4 |
| 20 | | | 300 | | | 50 | 1.00 | 6.0 | 0.4 |
| 21 | | | 300 | | | 58 | 1.40 | 5.1 | 0.4 |
| 22 | | | 300 | | | 67 | 2.00 | 4.5 | 0.3 |
| 23 | | | 300 | | | 75 | 3.00 | 4.0 | 0.3 |
| 24 | | | 300 | | | 80 | 4.00 | 3.8 | 0.3 |
| 25 | AEROSIL 380 | 5 nm | 380 | None | AGE060 | 20 | 0.25 | 19.0 | 0.4 |
| 26 | | | 380 | | | 26 | 0.35 | 14.7 | 0.4 |
| 27 | | | 380 | | | 33 | 0.50 | 11.4 | 0.3 |
| 28 | | | 380 | | | 41 | 0.70 | 9.2 | 0.3 |
| 29 | | | 380 | | | 50 | 1.00 | 7.6 | 0.3 |
| 30 | | | 380 | | | 58 | 1.40 | 6.5 | 0.3 |
| 31 | | | 380 | | | 67 | 2.00 | 5.7 | 0.3 |
| 32 | SNOWTEX ST-30 | 12 nm | 240 | None | AGE090 | 20 | 0.25 | 12.0 | 0.3 |
| 33 | | | 240 | | | 26 | 0.35 | 9.3 | 0.3 |
| 34 | | | 240 | | | 33 | 0.50 | 7.2 | 0.3 |
| 35 | | | 240 | | | 41 | 0.70 | 5.8 | 0.3 |
| 36 | | | 240 | | | 50 | 1.00 | 4.8 | 0.3 |
| 37 | | | 240 | | | 58 | 1.40 | 4.1 | 0.3 |
| 38 | | | 240 | | | 67 | 2.00 | 3.6 | 0.3 |

**[Table 2]**

| | 1st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 39 | HDK V15 | .. | 150 | None | AGE060 | 20 | 0.25 | 7.5 | 0.5 |
| 40 | | | 150 | | | 26 | 0.35 | 5.8 | 0.5 |
| 41 | | | 150 | | | 33 | 0.50 | 4.5 | 0.5 |
| 42 | | | 150 | | | 41 | 0.70 | 3.6 | 0.5 |
| 43 | | | 150 | | | 50 | 1.00 | 3.0 | 0.4 |
| 44 | | | 150 | | | 58 | 1.40 | 2.6 | 0.4 |
| 45 | | | 150 | | | 83 | 5.00 | 1.8 | 0.4 |
| 46 | HDK N20 | .. | 200 | None | AGE060 | 20 | 0.25 | 10.0 | 0.5 |
| 47 | | | 200 | | | 26 | 0.35 | 7.7 | 0.5 |
| 48 | | | 200 | | | 33 | 0.50 | 6.0 | 0.5 |
| 49 | | | 200 | | | 41 | 0.70 | 4.9 | 0.4 |
| 50 | | | 200 | | | 50 | 1.00 | 4.0 | 0.4 |
| 51 | | | 200 | | | 58 | 1.40 | 3.4 | 0.4 |
| 52 | | | 200 | | | 67 | 2.00 | 3.0 | 0.4 |
| 53 | HDK T30 | .. | 300 | None | AGE060 | 20 | 0.25 | 15.0 | 0.5 |
| 54 | | | 300 | | | 26 | 0.35 | 11.6 | 0.5 |
| 55 | | | 300 | | | 33 | 0.50 | 9.0 | 0.5 |
| 56 | | | 300 | | | 41 | 0.70 | 7.3 | 0.5 |
| 57 | | | 300 | | | 50 | 1.00 | 6.0 | 0.4 |
| 58 | | | 300 | | | 58 | 1.40 | 5.1 | 0.4 |
| 59 | | | 300 | | | 67 | 2.00 | 4.5 | 0.4 |
| 60 | | | 300 | | | 75 | 3.00 | 4.0 | 0.3 |
| 61 | | | 300 | | | 80 | 4.00 | 3.8 | 0.3 |
| 62 | HDK T40 | .. | 400 | None | AGE060 | 20 | 0.25 | 20.0 | 0.4 |
| 63 | | | 400 | | | 26 | 0.35 | 15.4 | 0.4 |
| 64 | | | 400 | | | 33 | 0.50 | 12.0 | 0.4 |
| 65 | | | 400 | | | 41 | 0.70 | 9.7 | 0.4 |
| 66 | | | 400 | | | 50 | 1.00 | 8.0 | 0.4 |
| 67 | | | 400 | | | 58 | 1.40 | 6.9 | 0.4 |
| 68 | | | 400 | | | 80 | 4.00 | 5.0 | 0.4 |
| 69 | SNOWTEX PS-S-PO | 15 nm | 190 | None | AGE090 | 20 | 0.25 | 9.5 | 0.3 |
| 70 | | | 190 | | | 26 | 0.35 | 7.3 | 0.3 |
| 71 | | | 190 | | | 33 | 0.50 | 5.7 | 0.3 |
| 72 | | | 190 | | | 41 | 0.70 | 4.6 | 0.3 |
| 73 | | | 190 | | | 50 | 1.00 | 3.8 | 0.3 |
| 74 | | | 190 | | | 58 | 1.40 | 3.3 | 0.3 |
| 75 | | | 190 | | | 67 | 2.00 | 2.9 | 0.3 |

**[Table 3]**

| | 1st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Product name | Mass% (F) | | M/F | Sa (µm) |
| 76 | AEROSIL 200 | 12 nm | 200 | SUN-LOVE LY | AGE060 | 20 | 0.25 | 10.0 | 0.8 |
| 77 | | | 200 | | | 26 | 0.35 | 7.7 | 0.8 |
| 78 | | | 200 | | | 33 | 0.50 | 6.0 | 0.8 |
| 79 | | | 200 | | | 41 | 0.70 | 4.9 | 0.8 |
| 80 | | | 200 | | | 50 | 1.00 | 4.0 | 0.7 |
| 81 | | | 200 | | | 58 | 1.40 | 3.4 | 0.7 |
| 82 | | | 200 | | | 67 | 2.00 | 3.0 | 0.6 |
| 83 | HDK N20 | .. | 200 | SUN-LOVE LY | AGE060 | 20 | 0.25 | 10.0 | 0.8 |
| 84 | | | 200 | | | 26 | 0.35 | 7.7 | 0.8 |
| 85 | | | 200 | | | 33 | 0.50 | 6.0 | 0.8 |
| 86 | | | 200 | | | 41 | 0.70 | 4.9 | 0.8 |
| 87 | | | 200 | | | 50 | 1.00 | 4.0 | 0.8 |
| 88 | | | 200 | | | 58 | 1.40 | 3.4 | 0.7 |
| 89 | | | 200 | | | 67 | 2.00 | 3.0 | 0.7 |

The compounding ratio of the first filler and the second filler was as follows.

**[Table 4]**

| Exp. Ex. No. | 1st filler Ws1 | 2nd filler Ws2 | Formulation ratio Ws2/Ws1 | Mass (mass part(s)) of 2nd filler relative to 100 mass parts of 1st filler |
|---|---|---|---|---|
| 76 | AEROSIL 200 | SUNLOVELY | 0.5 | 50 |
| 77 | | | 0.5 | 50 |
| 78 | | | 0.3 | 30 |
| 79 | | | 0.3 | 30 |
| 80 | | | 0.2 | 20 |
| 81 | | | 0.2 | 20 |
| 82 | | | 0.1 | 10 |
| 83 | HDK N20 | | 0.5 | 50 |
| 84 | | | 0.5 | 50 |
| 85 | | | 0.3 | 30 |
| 86 | | | 0.3 | 30 |
| 87 | | | 0.2 | 20 |
| 88 | | | 0.2 | 20 |
| 89 | | | 0.1 | 10 |

**[Table 5]**

| | 1st filler | | | 2nd filler | F-cont. resin | | F/Si ratio | BET sp. sur. area/ F-cont. resin | Sur. roughness |
|---|---|---|---|---|---|---|---|---|---|
| Exp. Ex. No. | Product name | Average prim. particle size | BET sp. sur. area m²/g (M) | | Produc t name | Mass% (F) | | M/F | Sa (µm) |
| 90 | AEROSIL 50 | 30 nm | 50 | None | AGE060 | 33 | 0.49 | 1.5 | 0.5 |
| 91 | AEROSIL 90G | 22 nm | 90 | None | AGE090 | 33 | 0.49 | 2.7 | 0.4 |
| 92 | 530 | 2.7 µm | 500 | None | AGE082 | 33 | 0.49 | 15.2 | 0.9 |
| 93 | SNOWTEX ST-XS | 5 nm | 600 | None | AGE090 | 33 | 0.49 | 18.2 | 0.5 |
| 94 | AEROSIL 300 | 7 nm | 300 | None | AGE060 | 14 | 0.16 | 21.4 | 0.6 |
| 95 | AEROSIL 200 | 12 nm | 200 | None | AGE060 | 9 | 0.10 | 22.2 | 0.7 |
| 96 | AEROSIL 130 | 15 nm | 130 | None | AGE060 | 95 | 19.00 | 1.4 | 0.2 |

### <Production of Liquid Repellent Structure (with Primer Layer)>

Each component was added to an alcohol solvent or an ester solvent (ester solvent when A525/A52 was used) so that the composition of the primer layer became as shown in Table 6. The resulting mixture was sufficiently stirred to prepare a primer layer-forming coating liquid, and the coating liquid was applied with a bar coater to a substrate made of a PET film. Subsequently, the applied coating liquid was dried and cured by heating at 80°C for 1 minute to form a primer layer on the substrate. The coating amount was adjusted so that the mass per unit area of the primer layer became 5.00 g/m². The ratio W_{BU}/W_{SU} of the mass W_{BU} of the binder resin to the mass Wsu of the third filler contained in the primer layer was 0.2. Then, a liquid repellent layer was formed on the primer layer in the same manner as in the case without primer layer. When the liquid repellent layer contains the first filler and the second filler, the compounding ratio Ws2/Ws1 between the first filler and the second filler was 0.5 (the mass of the second filler was 50 parts by mass relative to 100 parts by mass of the first filler).

**[Table 6]**

| | 1st filler | | | 2nd filler | F-cont. resin | | F/Si ratio | BET sp. sur. area/ F-cont. resin | Primer layer | | | Sur. roughness |
|---|---|---|---|---|---|---|---|---|---|---|---|---|
| Exp. Ex. No. | Product name | Average prim. particle size | BET sp. sur. area m²/g (M) | | Product name | Mass% (F) | | M/F | Binder resin | 3rd filler | Average prim. particle size | Sa (µm) |
| 97 | AEROSIL 200 | 12 nm | 200 | None | AG-E060 | 50 | 1.00 | 4.0 | SB5230N | SE-010T | 10 µm | 2 |
| 98 | | | 200 | | | | 1.00 | 4.0 | | SE-020T | 20 µm | 6 |
| 99 | | | 200 | | | | 1.00 | 4.0 | | SE-030T | 30 µm | 7.7 |
| 100 | | | 200 | | | | 1.00 | 4.0 | | SE-050T | 50 µm | 13.3 |
| 101 | HDK N20 | .. | 200 | None | AG-E060 | 50 | 1.00 | 4.0 | A525/A52 | SE-010T | 10 µm | 2.4 |
| 102 | | | 200 | | | | 1.00 | 4.0 | | SE-020T | 20 µm | 6.3 |
| 103 | | | 200 | | | | 1.00 | 4.0 | | SE-030T | 30 µm | 7 |
| 104 | | | 200 | | | | 1.00 | 4.0 | | SE-050T | 50 µm | 13.9 |
| 105 | AEROSIL 200 | 12 nm | 200 | SUNLOVELY | AG-E060 | 50 | 1.00 | 4.0 | SB5230N | SE-010T | 10 µm | 1.9 |
| 106 | | | 200 | | | | 1.00 | 4.0 | | SE-020T | 20 µm | 6.2 |
| 107 | | | 200 | | | | 1.00 | 4.0 | | SE-030T | 30 µm | 7 |
| 108 | | | 200 | | | | 1.00 | 4.0 | | SE-050T | 50 µm | 13.2 |
| 109 | HDK N20 | .. | 200 | SUNLOVELY | AG-E060 | 50 | 1.00 | 4.0 | A525/A52 | SE-010T | 10 µm | 2 |
| 110 | | | 200 | | | | 1.00 | 4.0 | | SE-020T | 20 µm | 6.5 |
| 111 | | | 200 | | | | 1.00 | 4.0 | | SE-030T | 30 µm | 8 |
| 112 | | | 200 | | | | 1.00 | 4.0 | | SE-050T | 50 µm | 14.2 |

### <Evaluation of Liquid Repellent Structure>

The liquid repellent structures were evaluated from the following viewpoints. Tables 7 to 11 show the evaluation results.

### (Liquid Repellency Evaluation)

The liquid repellent structure was placed flat with the liquid repellent layer upward, and 2 µL of each of the following liquids was dropped with a dropper on the liquid repellent layer. Subsequently, the liquid repellent structure was allowed to stand vertically and left in that state for 30 seconds. Then, the state of the dropped liquid was visually observed. The liquid repellency was evaluated from the observation results based on the following evaluation criteria. It can be said that there is no practical problem if the evaluation results are 2 to 5. It is desirable that the evaluation results are 3 to 5.

### [Liquids Used]

Pure water
Yogurt: Meiji Bulgaria Yogurt L81 Low Sugar (Meiji)
Salad oil: Nisshin Salad Oil (Nisshin OilliO)
Curry (room temperature): Bon Curry Gold Medium Hot (Otsuka Foods)
Milky lotion: Soymilk isoflavone-containing milky lotion (Tokiwa Pharmaceutical Co., Ltd.)
Lotion: Soymilk isoflavone-containing lotion (Tokiwa Pharmaceutical Co., Ltd.)

### [Evaluation Criteria]

5: The droplets rolled off from the surface of the liquid repellent layer, or separated.
4: The liquid flowed down from the surface of the liquid repellent layer, and no traces of liquid flow remained.
3: The liquid flowed down from the surface of the liquid repellent layer, but traces of liquid flow remained in dots.
2: The liquid flowed down from the surface of the liquid repellent layer, but traces of liquid flow remained in lines.
1: The liquid retained on the liquid repellent layer and did not move, or soaked into the liquid repellent layer.

### (Durability Evaluation)

The liquid repellent structure was cut into a size of a width of 50 mm and a length of 100 mm to prepare a test piece. Among the liquids used in the liquid repellency evaluation, 150 ml of each liquid was poured into a 200-ml beaker, and the test piece was dipped in the liquid to half of the length thereof and allowed to stand at room temperature (25°C) for 5 days. After being allowed to stand, the test piece was pulled out from the liquid, and the state of adhesion of each liquid to a surface of the liquid repellent layer of the liquid repellent structure in the dipped portion was visually observed. Then, the durability (liquid repellency after being in contact with each liquid for a long period of time) was evaluated based on the following evaluation criteria.

### [Evaluation Criteria]

5: No adhesion of the liquid to the dipped portion was observed.
4: Adhesion of the liquid to less than 10% of the area of the dipped portion was observed.
3: Adhesion of the liquid to 10% or more and less than 30% of the area of the dipped portion was observed.
2: Adhesion of the liquid to 30% or more and less than 70% of the area of the dipped portion was observed.
1: Adhesion of the liquid to 70% or more of the area of the dipped portion was observed.

**[Table 7]**

| | Liquid repellency | | | | | Durability |
|---|---|---|---|---|---|---|
| Exp. Ex. No. | Pure water | Yogurt | Salad oil | Curry | Milky lotion | Pure water |
| 1 | 5 | 4 | 3 | 2 | 2 | 2 |
| 2 | 5 | 4 | 3 | 2 | 2 | 2 |
| 3 | 4 | 3 | 2 | 2 | 2 | 3 |
| 4 | 4 | 3 | 2 | 2 | 2 | 3 |
| 5 | 4 | 3 | 2 | 2 | 2 | 3 |
| 6 | 4 | 3 | 2 | 2 | 2 | 3 |
| 7 | 4 | 3 | 2 | 2 | 2 | 3 |
| 8 | 4 | 3 | 2 | 2 | 2 | 3 |
| 9 | 5 | 4 | 3 | 2 | 2 | 2 |
| 10 | 5 | 4 | 3 | 2 | 2 | 2 |
| 11 | 5 | 4 | 3 | 2 | 2 | 2 |
| 12 | 5 | 4 | 3 | 2 | 2 | 2 |
| 13 | 4 | 3 | 2 | 2 | 2 | 3 |
| 14 | 4 | 3 | 2 | 2 | 2 | 3 |
| 15 | 4 | 3 | 2 | 2 | 2 | 3 |
| 16 | 5 | 4 | 3 | 2 | 2 | 2 |
| 17 | 5 | 4 | 3 | 2 | 2 | 2 |
| 18 | 5 | 4 | 3 | 2 | 2 | 2 |
| 19 | 5 | 4 | 3 | 2 | 2 | 2 |
| 20 | 5 | 4 | 3 | 2 | 2 | 2 |
| 21 | 5 | 4 | 3 | 2 | 2 | 2 |
| 22 | 5 | 4 | 3 | 2 | 2 | 2 |
| 23 | 4 | 3 | 2 | 2 | 2 | 3 |
| 24 | 4 | 3 | 2 | 2 | 2 | 3 |
| 25 | 5 | 4 | 3 | 2 | 2 | 2 |
| 26 | 5 | 4 | 3 | 2 | 2 | 2 |
| 27 | 5 | 4 | 3 | 2 | 2 | 2 |
| 28 | 5 | 4 | 3 | 2 | 2 | 2 |
| 29 | 5 | 4 | 3 | 2 | 2 | 2 |
| 30 | 5 | 4 | 3 | 2 | 2 | 2 |
| 31 | 5 | 4 | 3 | 2 | 2 | 2 |
| 32 | 5 | 4 | 3 | 2 | 2 | 2 |
| 33 | 5 | 4 | 3 | 2 | 2 | 2 |
| 34 | 5 | 4 | 3 | 2 | 2 | 2 |
| 35 | 5 | 4 | 3 | 2 | 2 | 2 |
| 36 | 5 | 4 | 3 | 2 | 2 | 2 |
| 37 | 5 | 4 | 3 | 2 | 2 | 2 |
| 38 | 4 | 3 | 2 | 2 | 2 | 3 |

**[Table 8]**

| | Liquid repellency | | | | | Durability | |
|---|---|---|---|---|---|---|---|
| Exp. Ex. No. | Pure water | Yogurt | Salad oil | Curry | Milky lotion | Pure water | Yogurt |
| 39 | 5 | 4 | 3 | 2 | 2 | 3 | 2 |
| 40 | 5 | 4 | 3 | 2 | 2 | 3 | 2 |
| 41 | 5 | 4 | 3 | 2 | 2 | 3 | 2 |
| 42 | 4 | 3 | 2 | 2 | 2 | 4 | 3 |
| 43 | 4 | 3 | 2 | 2 | 2 | 4 | 3 |
| 44 | 4 | 3 | 2 | 2 | 2 | 4 | 3 |
| 45 | 4 | 3 | 2 | 2 | 2 | 4 | 3 |
| 46 | 5 | 4 | 3 | 2 | 2 | 3 | 2 |
| 47 | 5 | 4 | 3 | 2 | 2 | 3 | 2 |
| 48 | 5 | 4 | 3 | 2 | 2 | 3 | 2 |
| 49 | 5 | 4 | 3 | 2 | 2 | 3 | 2 |
| 50 | 4 | 3 | 3 | 2 | 2 | 4 | 3 |
| 51 | 4 | 3 | 2 | 2 | 2 | 4 | 3 |
| 52 | 4 | 3 | 2 | 2 | 2 | 4 | 3 |
| 53 | 5 | 4 | 3 | 2 | 2 | 3 | 2 |
| 54 | 5 | 4 | 3 | 2 | 2 | 3 | 2 |
| 55 | 5 | 4 | 3 | 2 | 2 | 3 | 2 |
| 56 | 5 | 4 | 3 | 2 | 2 | 3 | 2 |
| 57 | 5 | 4 | 3 | 2 | 2 | 3 | 2 |
| 58 | 5 | 4 | 3 | 2 | 2 | 3 | 2 |
| 59 | 5 | 4 | 3 | 2 | 2 | 3 | 2 |
| 60 | 4 | 3 | 2 | 2 | 2 | 4 | 3 |
| 61 | 4 | 3 | 2 | 2 | 2 | 4 | 3 |
| 62 | 4 | 4 | 3 | 2 | 2 | 3 | 2 |
| 63 | 4 | 4 | 3 | 2 | 2 | 3 | 2 |
| 64 | 4 | 4 | 3 | 2 | 2 | 3 | 2 |
| 65 | 4 | 4 | 3 | 2 | 2 | 3 | 2 |
| 66 | 4 | 4 | 3 | 2 | 2 | 3 | 2 |
| 67 | 4 | 4 | 3 | 2 | 2 | 3 | 2 |
| 68 | 4 | 4 | 3 | 2 | 2 | 3 | 2 |
| 69 | 5 | 4 | 3 | 2 | 2 | 3 | 2 |
| 70 | 5 | 4 | 3 | 2 | 2 | 3 | 2 |
| 71 | 5 | 4 | 3 | 2 | 2 | 3 | 2 |
| 72 | 5 | 4 | 3 | 2 | 2 | 3 | 2 |
| 73 | 4 | 3 | 2 | 2 | 2 | 4 | 3 |
| 74 | 4 | 3 | 2 | 2 | 2 | 4 | 3 |
| 75 | 4 | 3 | 2 | 2 | 2 | 4 | 3 |

**[Table 9]**

| | Liquid repellency | | | | | Durability | |
|---|---|---|---|---|---|---|---|
| Exp. Ex. No. | Pure water | Yogurt | Salad oil | Curry | Milky lotion | Pure water | Yogurt |
| 76 | 5 | 5 | 4 | 4 | 4 | 3 | 3 |
| 77 | 5 | 5 | 4 | 4 | 4 | 3 | 3 |
| 78 | 5 | 5 | 4 | 4 | 4 | 3 | 3 |
| 79 | 5 | 5 | 4 | 4 | 4 | 3 | 3 |
| 80 | 5 | 5 | 4 | 4 | 4 | 4 | 4 |
| 81 | 5 | 5 | 4 | 4 | 4 | 4 | 4 |
| 82 | 5 | 5 | 4 | 4 | 4 | 4 | 4 |
| 83 | 5 | 5 | 4 | 4 | 4 | 3 | 3 |
| 84 | 5 | 5 | 4 | 4 | 4 | 3 | 3 |
| 85 | 5 | 5 | 4 | 4 | 4 | 3 | 3 |
| 86 | 5 | 5 | 4 | 4 | 4 | 3 | 3 |
| 87 | 5 | 5 | 4 | 4 | 4 | 5 | 5 |
| 88 | 5 | 5 | 4 | 4 | 4 | 5 | 5 |
| 89 | 5 | 5 | 4 | 4 | 4 | 5 | 5 |

**[Table 10]**

| | Liquid repellency | | | | | Durability | | |
|---|---|---|---|---|---|---|---|---|
| Exp. Ex. No. | Pure water | Yogurt | Salad oil | Curry | Milky lotion | Pure water | Yogurt | Lotion |
| 90 | 4 | 3 | 2 | 2 | 2 | 1 | 1 | 1 |
| 91 | 4 | 3 | 2 | 2 | 2 | 1 | 1 | 1 |
| 92 | 5 | 4 | 3 | 2 | 2 | 1 | 1 | 1 |
| 93 | 5 | 4 | 3 | 2 | 2 | 1 | 1 | 1 |
| 94 | 1 | 1 | 1 | 1 | 1 | 1 | 1 | 1 |
| 95 | 1 | 1 | 1 | 1 | 1 | 1 | 1 | 1 |
| 96 | 4 | 1 | 1 | 1 | 1 | 1 | 1 | 1 |

**[Table 11]**

| | Liquid repellency | | | | | Durability | | |
|---|---|---|---|---|---|---|---|---|
| Exp. Ex. No. | Pure water | Yogurt | Salad oil | Curry | Milky lotion | Pure water | Yogurt | Lotion |
| 97 | 5 | 5 | 4 | 4 | 4 | 4 | 3 | 2 |
| 98 | 5 | 5 | 4 | 4 | 4 | 4 | 3 | 3 |
| 99 | 5 | 5 | 4 | 4 | 4 | 4 | 3 | 3 |
| 100 | 5 | 5 | 4 | 4 | 4 | 4 | 3 | 2 |
| 101 | 5 | 5 | 4 | 4 | 4 | 4 | 3 | 2 |
| 102 | 5 | 5 | 4 | 4 | 4 | 4 | 3 | 3 |
| 103 | 5 | 5 | 4 | 4 | 4 | 4 | 4 | 3 |
| 104 | 5 | 5 | 4 | 4 | 4 | 4 | 4 | 2 |
| 105 | 5 | 5 | 4 | 4 | 5 | 5 | 3 | 3 |
| 106 | 5 | 5 | 4 | 4 | 5 | 5 | 3 | 4 |
| 107 | 5 | 5 | 4 | 4 | 5 | 5 | 4 | 4 |
| 108 | 5 | 5 | 4 | 4 | 5 | 5 | 4 | 3 |
| 109 | 5 | 5 | 4 | 4 | 5 | 5 | 5 | 3 |
| 110 | 5 | 5 | 4 | 4 | 5 | 5 | 5 | 4 |
| 111 | 5 | 5 | 4 | 4 | 5 | 5 | 5 | 4 |
| 112 | 5 | 5 | 4 | 4 | 5 | 5 | 5 | 3 |

In Experimental Examples 3 to 8, 13 to 15, 23 to 24, 38, 42 to 45, 50 to 52, 60 to 61, 73 to 75, 80 to 82, 87 to 89 and 97 to 112, the liquid repellent structures having the configuration of the present disclosure were found to have excellent liquid repellency to water or liquid materials containing water for a long period of time.

### [Reference Signs List]

- 1: Substrate
- 1a: Treatment surface (surface to which liquid repellency is to be imparted)
- 2: Primer layer
- 3A, 3B, 3C: Liquid repellent layer
- 5b: Binder resin
- 5f: First filler
- 6f: Second filler
- 7b: Binder resin
- 7f: Third filler
- F: Aggregate
- 10A, 10B, 10C: Liquid repellent structure

## Claims

1. A liquid repellent structure comprising:
a surface to which liquid repellency is to be imparted; and
a liquid repellent layer formed on the surface, wherein
the liquid repellent layer contains a binder resin containing a fluorine-containing resin, and a filler dispersed in the binder resin,
the filler contains a first filler having a BET specific surface area M of 100 m²/g to 400 m²/g, and
a ratio M/F of the BET specific surface area M of the first filler to a mass F (mass%) of the fluorine-containing resin relative to a total mass of the liquid repellent layer is 1.5 to 4.0.

2. The liquid repellent structure according to claim 1, wherein the first filler has a structure in which a plurality of primary particles are connected in a bead-like manner.

3. The liquid repellent structure according to claim 1 or 2, wherein the fluorine-containing resin contains a fluorine-acrylic copolymer.

4. The liquid repellent structure according to any one of claims 1 to 3, wherein the filler contains a second filler having a scale-like shape.

5. The liquid repellent structure according to any one of claims 1 to 4, further comprising:
a primer layer interposed between the surface and the liquid repellent layer, wherein
the primer layer contains a binder resin and a third filler having an average primary particle size of 5 µm to 60 µm.

6. The liquid repellent structure according to claim 5, wherein a surface roughness Sa is 1.5 µm to 15.0 µm.

7. A packaging material comprising the liquid repellent structure according to any one of claims 1 to 6 on a side that comes into contact with substances.

8. The packaging material according to claim 7, wherein the substances contain water.

9. A method for forming a liquid repellent structure, the method comprising the steps of:
preparing a coating liquid containing a binder resin containing a fluorine-containing resin, and a filler;
forming a coating film of the coating liquid on a surface to which liquid repellency is to be imparted; and
forming a liquid repellent layer by drying and curing the coating film, wherein
the filler contains a first filler having a BET specific surface area M of 100 m²/g to 400 m²/g, and
a ratio M/F of the BET specific surface area M of the first filler to a mass F (mass%) of the fluorine-containing resin relative to a total mass of a solid content contained in the coating liquid is 1.5 to 4.0.

10. A coating liquid for forming a liquid repellent layer, the coating liquid comprising:
a binder resin containing a fluorine-containing resin; and
a filler, wherein
the filler contains a first filler having a BET specific surface area M of 100 m²/g to 400 m²/g, and
a ratio M/F of the BET specific surface area M of the first filler to a mass F (mass%) of the fluorine-containing resin relative to a total mass of a solid content contained in the coating liquid is 1.5 to 4.0.
